# EUROPEAN PATENT SPECIFICATION

(11) **EP 2 507 291 B1**
(45) Date of publication and mention of the grant of the patent: **08.01.2014**
(21) Application number: 09768568.9
(22) Date of filing: 30.11.2009
(51) Int. Cl.: C08G 77/388, C08G 77/54, C08L 83/08, C08L 83/14, B01D 17/04, C08G 65/336, C08L 71/02

(54) **DEMULSIFYING COMPOSITIONS AND METHODS FOR SEPARATING EMULSIONS USING THE SAME**
DEMULGATORZUSAMMENSETZUNGEN UND VERFAHREN ZUR EMULSIONSSPALTUNG UNTER EINSATZ DERSELBEN
COMPOSITIONS DESEMULSIFIANTES ET PROCEDES DE SEPARATION D'EMULSIONS LES UTILISANT

(43) Date of publication of application: 10.10.2012
(73) Proprietor: Momentive Performance Materials Inc., Waterford, New York 12188 (US)
(72) Inventor: KOCZO, Kalman, Suffern NY 10901 (US); FALK, Benjamin, Yorktown Heights NY 10598 (US); PALUMBO, Antonio, Siracusa (IT); PHUKAN, Monjit, Bangalore (IN)
(74) Representative: Herrmann, Uwe
(86) International application number: PCT/US2009/066087
(87) International publication number: WO 2011/065955

(56) References cited:
- WO-A1-2009/061360
- CN-A- 101 474 544
- US-A1- 2006 178 233
- US-A1- 2009 192 234

## Description

### FIELD OF THE INVENTION

The present invention relates to demulsifying compositions comprising non-crosslinked copolymers of epoxy compounds and amino silicones.

### BACKGROUND OF THE INVENTION

Modified silicones can exhibit a variety of physical properties. The polymers can be modified to be hydrophilic, lipophilic and hydrophobic depending on the nature of the organic substituents. Recently, linear alternating copolymers and linear random copolymers have been made using alkyl or polyether, and polydimethylsiloxane units. These materials have shown unexpected and superior properties as demulsifying agents, in particular as demulsifying agents used in the processing of crude-oil mixtures.

### SUMMARY OF THE INVENTION

According to the invention, there is provided a demulsifying composition according to claim 1. More particularly there is provided a non-crosslinked composition comprising the reaction product of
I) an oxirane or oxetane compound (I) comprising at least two oxirane oroxetane groups which is a polyether; and,
II) a compound (II) comprising silicon and one or more amino groups; and optionally
III) a polyamine (III); and
IV) a secondary amine (IV).

Preferably the oxirane or oxetane compound (I) is a polyether having the formula::

R¹²O(C₂H₄O)_{w}(C₃N₆O)ₓ(C₄H₈O)_{y}R¹³

where R¹² and R¹³ are independently a monovalent hydrocarbon radical containing one or more oxirane or oxetane moieties having from 2 to about 12 carbon atoms;
the subscript *w* is 0 to about 100 subject to the limitation that (*w* + *x* + *y*) > 0;
the subscript *x* is 0 to about 100 subject to the limitation that (*w* + *x* + *y*) *>* 0;
the subscript *y* is 0 to about 100 subject to the limitation that (*w* + *x + y*) > 0.

According to the invention compound (II) comprising silicon and one or more amino groups is selected from the group consisting of siloxanes having the formula:

MₐₐM^{A}_{bb}M^{PE}_{cc}M^{H}_{dd}D_{ff}D^{A}_{gg}D^{PE}ₕₕD^{H}ᵢᵢT^{A}TⱼⱼT^{A}ₖₖT^{PE}ₗₗT^{H}ₘₘQₙₙ with

M = R¹⁵R¹⁶R¹⁷SiO_{1/2};
M^{H} = R¹⁵R¹⁶HSiO_{1/2};
M^{PE} = R¹⁵R¹⁶(-CH₂CH(R¹⁸)(R¹⁹)ₒₒO(C₂H₄O)ₚₚ(C₃H₆O)_{qq}(C₄H₈O)ₙR²⁰)SiO_{1/2};
M^{A} = R⁵R⁶(R^{A})SiO_{1/2};
D = R¹⁵R¹⁶SiO_{2/2};
D^{H} = R¹⁵HSiO_{2/2};
D^{PE} = R¹⁵(-CH₂CH(R¹⁸)(R¹⁹)ₒₒO(C₂H₄O)ₚₚ(C₃H₆O)_{qq}(C₄H₈O)ₙR²⁰)SiO_{2/2};
D^{A} = R¹⁵R^{A}SiO_{2/2};
T = R¹⁵SiO_{3/2};
T^{H} = HSiO_{3/2};
T^{PE} = (-CH₂CH(R¹⁸)(R¹⁹)ₒₒO(C₂H₄O)ₚₚ(C₃H₆O)_{qq}(C₄H₈O)ₙR²⁰)SiO_{3/2}:
T^{A} = R^{A}SiO_{3/2}; and
Q = SiO_{4/2};
where R¹⁵, R¹⁶ and R¹⁷ are each independently selected from the group of monovalent hydrocarbon radical having from 1 to about 60 carbon atoms;
R¹⁸ is H or a 1 to about 6 carbon atom alkyl group; R¹⁹ is a divalent hydrocarbon radical of 1 to about 6 carbons; R²⁰ is selected from the group consisting of H, monofunctional hydrocarbon radicals of 1 to about 6 carbons, and acetyl;
R^{A} is independently a monovalent hydrocarbon radical containing one or more amino moieties having from one to about sixty carbon atoms;
the subscript aa is 0 to 5;
the subscript *bb* is 0 to 5;
the subscript *ff* is 0 to 200;
the subscript *gg* is 0 to 20;
the subscript *jj* is 0 to 10;
the subscript *kk* is 0 to 5;
the subscript *nn* is 0 to 5;
the subscript *cc* is 0 to 5;
the subscript *hh* is 0 to 50;
the subscript *ll* is 0 to 5;
the subscript *dd* is 0 to 2;
the subscript *ii* is 0 to 5;
the subscript *mm* is 0 to 5;
the subscript *oo* is zero or one;
the subscript *pp* is 0 to 100;
the subscript *qq* is 0 to about 100;
the subscript *rr* is 0 to about 100
subject to the limitations that the sum of the subscripts bb, gg and kk in greater than 1;
   and (pp + qq + rr) > 0.

Optionally the reaction of compound (I) with compound (II) can be conducted in the presence of compound (III) comprising a polyamine having the formula:

N(R²¹)(R²²)A[N(R²³)(R²⁴)]_{zz},

where
R²¹, R²², R²³ and R²⁴ are independently chosen from the group consisting of H or a monovalent hydrocarbon radical containing one 1 to about 20 carbon atoms;
A is selected from a group consisting of a divalent linear or branched hydrocarbon radical consisting of about 1 to about 60 carbons or a divalent polydialkyl-siloxane radical, optionally containing S, O or N and the subscript zz is positive ad has a value ranging from about 1 to about 20.

The result will be a non-crosslinked reaction product of compound (I) with compound (II), and compound (III).

Optionally the reaction of compound (I) with compound (II) can be conducted in the presence of compound (IV) comprising a secondary amine.

Examples of secondary amines are diethanolamine, dimethanolamine, diethylamine, dimethylamine, ethylmethylamine, dipropylamine, diisopropylamine, dibutylamine, dicyclohexylamine, diphenylamine piperidine, pyrrolidine phthalimide, 1,1,1,3,5,5,5-heptamethyl-3-(methylaminopropyl)-trisiloxane, Methyl-(3-trimethylsilanyl-propyl)-amine and the like. Polymeric amines may also be used as such.

The result will be a non-crosslinked reaction product of compound (I) with compound (II), and compound (IV).

Optionally the reaction of compound (I) with compound (II) can be conducted in the presence of compound (III) and compound (IV). The result will be a non-crosslinked reaction product of compound (I) with compound (II), compound (III) and compound (IV).

Yet another embodiment of the present invention is directed to a method for separating emulsions comprising:
(i) incorporating a demulsifying-effective amount of at least one composition of the present invention into an emulsion;
(ii) allowing the emulsion to separate into at least two phases; and
(iii) separating said at least two phases from each other.

Additional embodiments are also part of the present invention, which are further described in the Detailed Description of the Invention below.

### DETAILED DESCRIPTION OF THE INVENTION

According to the invention, there is provided a non-crosslinked composition comprising the reaction product of
I) an oxitane or oxetane compound (I) comprising at least two oxirane or oxetane groups which is a polyether; and
II) a compound (II) comprising silicon and one or more amino groups;
   and optionally
III) a polyamine (III); and
IV) a secondary amine (IV).

The oxirane or oxetane compound (I) may be a polyether having the formula:

R¹²O(C₂H₄O)_{w}(C₃H₆O)ₓ(C₄H₈O)_{y}R¹³

where R¹² and R¹³ are independently a monovalent hydrocarbon radical containing one or more oxirane or oxetane moieties having from about 2 to about 12 carbon atoms;
the subscript *w* is 0 to about 100, 1 to about 100, subject to the limitation that (*w* + *x* + *y*) > 0;
the subscript *x* is 0 to about 100, 1 to about 100, subject to the limitation that (*w* + *x* + *y*) > 0;
the subscript *y* is 0 to about 100, 1 to about 100, subject to the limitation that (*w* + *x* + *y*) > 0.

According to the present invention compound (II) comprising silicon and one or more amino groups is selected from the group consisting of siloxanes having the formula:

MₐₐM^{A}_{bb}M^{PE}_{cc}M^{H}_{dd}D_{ff}D^{A}_{gg}D^{PE}ₕₕD^{H}ᵢᵢTⱼⱼT^{A}ₖₖT^{PE}ₗₗT^{H}ₘₘQₙₙ with

M = R¹⁵R¹⁶R¹⁷SiO_{1/2};
M^{H} = R¹⁵R¹⁶H SiO_{1/2};
M^{PE} = R¹⁵R¹⁶(-CH₂CH(R¹⁸)(R¹⁹)ₒₒO(C₂H₄O)ₚₚ(C₃H₆O)_{qq}(C₄H₈O)ᵣᵣR²⁰)SiO_{1/2;}
M^{A}= R¹⁵R¹⁶(R^{A})SiO_{1/2};
D = R¹⁵R¹⁶SiO_{2/2};
D^{H} = R¹⁵HSiO_{2/2};
D^{PE} = R¹⁵(-CH₂CH(R¹⁸)(R¹⁹)ₒₒO(C₂H₄O)ₚₚ(C₃H₆O)_{qq}(C₄H₈O)ᵣᵣR²⁰)SiO_{2/2};
D^{A} = R¹⁵R^{A}SiO_{2/2};
T = R¹⁵SiO_{3/2};
T^{H} = HSiO_{3/2};
T^{PE} = (-CH₂CH(R¹⁸)(R¹⁹)ₒₒO(C₂H₄O)ₚₚ(C₃H₆O)_{qq}(C₄H₈O)ᵣᵣR²⁰)SiO_{3/2};
T^{A} = R^{A}SiO_{3/2}; and
Q = SiO_{4/2};
where R¹⁵, R¹⁶ and R¹⁷ are each independently selected from the group of monovalent hydrocarbon radicals having from 1 to about 60 carbon atoms; R¹⁸ is H or a 1 to about 6 carbon atom alkyl group; R¹⁹ is a divalent hydrocarbon radical of 1 to about 6 carbons; R²⁰ is selected from the group consisting of H, monofunctional hydrocarbon radicals of 1 to about 6 carbons, and acetyl;
R^{A} is independently a monovalent hydrocarbon radical containing one or more amino moieties having from one to about sixty carbon atoms;
the subscript aa is 0 to 5;
the subscript *bb* is 0 to 5;
the subscript *ff* is 0 to 200;
the subscript *gg* is 0 to 20
the subscript *jj* is 0 to 10;
the subscript *kk* is 0 to 5;
the subscript *nn* is 0 to 5;
the subscript *cc* is 0 to 5;
the subscript *hh* is 0 to 50;
the subscript *ll* is 0 to 5;
the subscript *dd* is 0 to 2;
the subscript *ii* is 0 to 5;
the subscript *mm* is 0 to 5;
the subscript *oo* is zero or one;
the subscript *pp* is 0 to 100;
the subscript *qq* is 0 to about 100;
the subscript *rr* is 0 to about 100;
subject to the limitations that the sum of the subscripts bb, gg and kk is greater than 1;
   and (pp + qq + rr) > 0.

Optionally the reaction of compound (I) with compound (II) can be conducted in the presence of compound (III) comprising a polyamine having the formula:

N(R²¹)(R²²)A[N(R²³)(R²⁴)]_{zz},

where
R²¹, R²², R²³ and R²⁴ are independently chosen from the group consisting of H or a monovalent hydrocarbon radical containing one to about 20 carbon atoms; and
A is selected from a group consisting of a divalent linear or branched hydrocarbon radical consisting of 1 to about 60 carbons or a divalent polydialkyl-siloxane radical, optionally containing S, O or N and the subscript *zz* is about 1 to about 20.

The result will be a non-crosslinked reaction product of compound (I) with compound (II), and compound (III).

Optionally the reaction of compound (I) with compound (II) can be conducted in the presence of compound (IV) comprising a secondary amine.

Examples of secondary amines are diethanolamine, dimethanolamine, diethylamine, dimethylamine, ethyl methylamine, dipropylamine, diisopropylamine, dibutylamine, dicyclohexylamine, diphenylamine, piperidine, pyrrolidine phthalimide, 1,1,1,3,5,5,5-heptamethyl-3-(methylaminopropyl)-trisiloxane, Methyl-(3-trimethylsilanyl-propyl)-amine and the like. Polymeric amines may also be used as such.

The result will be a non-crosslinked reaction product of compound (I) with compound (II), and compound (IV).

Optionally the reaction of compound (I) with compound (II) can be conducted in the presence of compound (III) and compound (IV). The result will be a non-crosslinked reaction product of compound (I) with compound (II), compound (III) and compound (IV).

In one embodiment of the present invention is a non-crosslinked reaction product of a polyepoxy-compound with an aminosilane free of alkoxy groups or an aminosilicone as represented in the formula below. 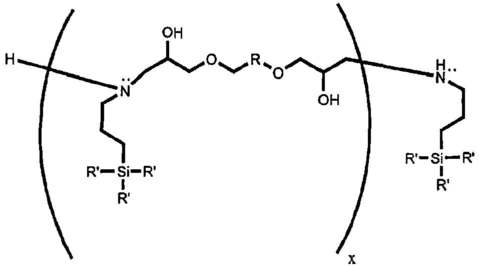 wherein R is a divalent organic or silicone group and R' is a monovalent alkyl or siloxane and x is about 2 to about 1000, preferably x is about 3 to about 100, and more preferably x is about 4 to about 20.

A preferred reaction product of the present invention is shown in the formula below. 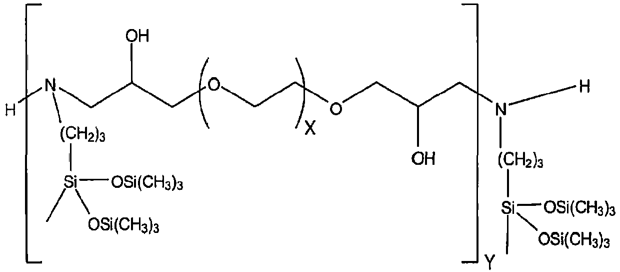 wherein X is about 5 to about 30 and Y is about 2 to about 100, preferably X is about 6 to about 20 and Y is about 4 to about 50, and more preferably X is about 8 to about 15 and Y is about 6 to about 20.

In the specification and claims herein, the following terms and expressions are to be understood as indicated.

The expression "hydrocarbon radicals" means any hydrocarbon group from which one or more hydrogen atoms has been removed and is inclusive of alkyl, alkenyl, alkynyl, cyclic alkyl, cyclic alkenyl, cyclic alkynyl, aryl, aralkyl and arenyl and may contain heteroatoms.

The term "alkyl" means any monovalent, saturated straight, branched or cyclic hydrocarbon group; the term "alkenyl" means any monovalent straight, branched, or cyclic hydrocarbon group containing one or more carbon-carbon double bonds where the site of attachment of the group can be either at a carbon-carbon double bond or elsewhere therein; and, the term "alkynyl" means any monovalent straight, branched, or cyclic hydrocarbon group containing one or more carbon-carbon triple bonds and, optionally, one or more carbon-carbon double bonds, where the site of attachment of the group can be either at a carbon-carbon triple bond, a carbon-carbon double bond or elsewhere therein. Examples of alkyls include methyl, ethyl, propyl and isobutyl. Examples of alkenyls include vinyl, propenyl, allyl, methallyl, ethylidenyl norbornane, ethylidene norbornyl, ethylidenyl norbornene and ethylidene norbornenyl. Examples of alkynyls include acetylenyl, propargyl and methylacetylenyl.

The expressions "cyclic alkyl", "cyclic alkenyl", and "cyclic alkynyl" include bicyclic, tricyclic and higher cyclic structures as well as the aforementioned cyclic structures further substituted with alkyl, alkenyl, and/or alkynyl groups. Representative examples include norbornyl, norbornenyl, ethylnorbornyl, ethylnorbornenyl, cyclohexyl, ethylcyclohexyl, ethylcyclohexenyl, cyclohexylcyclohexyl and cyclododecatrienyl.

The term "aryl" means any monovalent aromatic hydrocarbon group; the term "aralkyl" means any alkyl group (as defined herein) in which one or more hydrogen atoms have been substituted by the same number of like and/or different aryl (as defined herein) groups; and, the term "arenyl" means any aryl group (as defined herein) in which one or more hydrogen atoms have been substituted by the same number of like and/or different alkyl groups (as defined herein). Examples of aryls include phenyl and naphthalenyl. Examples of aralkyls include benzyl and phenethyl. Examples of arenyls include tolyl and xylyl.

Other than in the working examples or where otherwise indicated, all numbers expressing amounts of materials, reaction conditions, time durations, quantified properties of materials, and so forth, stated in the specification and claims are to be understood as being modified in all instances by the term "about" whether or not the term "about" is used in the expression.

It will be understood that any numerical range recited herein includes all sub-ranges within that range and any combination of the various endpoints of such ranges or sub-ranges.

It will be further understood that any compound, material or substance which is expressly or implicitly disclosed in the specification and/or recited in a claim as belonging to a group of structurally, compositionally and/or functionally related compounds, materials or substances includes individual representatives of the group and all combinations thereof.

The term "cross-linked polymers" means polymer molecules which are built from monomers which are linked together at many points other than their ends and as a result molecules with large size form and the material is non-pourable solid or gel-like which cannot be dissolved in any solvent.

The copolymers in our invention are "non-crosslinked", which means that their monomers are either not linked together at points other than their ends or the linkages between the polymers are so few that the copolymer is either liquid or can be dissolved in at least one solvent.

Reference is made to substances, components, or ingredients in existence at the time just before first contacted, formed *in situ,* blended, or mixed with one or more other substances, components, or ingredients in accordance with the present disclosure. A substance, component or ingredient identified as a reaction product, resulting mixture, or the like may gain an identity, property, or character through a chemical reaction or transformation during the course of contacting, *in situ* formation, blending, or mixing operation if conducted in accordance with this disclosure with the application of common sense and the ordinary skill of one in the relevant art (e.g., chemist). The transformation of chemical reactants or starting materials to chemical products or final materials is a continually evolving process, independent of the speed at which it occurs. Accordingly, as such a transformative process is in progress there may be a mix of starting and final materials, as well as intermediate species that may be, depending on their kinetic lifetime, easy or difficult to detect with current analytical techniques known to those of ordinary skill in the art.

Reactants and components referred to by chemical name or formula in the specification or claims hereof, whether referred to in the singular or plural, may be identified as they exist prior to coming into contact with another substance referred to by chemical name or chemical type (e.g., another reactant or a solvent). Preliminary and/or transitional chemical changes, transformations, or reactions, if any, that take place in the resulting mixture, solution, or reaction medium may be identified as intermediate species, master batches, and the like, and may have utility distinct from the utility of the reaction product or final material. Other subsequent changes, transformations, or reactions may result from bringing the specified reactants and/or components together under the conditions called for pursuant to this disclosure. In these other subsequent changes, transformations, or reactions the reactants, ingredients, or the components to be brought together may identify or indicate the reaction product or final material,

In describing the products of the instant invention as a reaction product of initial materials reference is made to the initial species recited and it is to be noted that additional materials may be added to the initial mixture of synthetic precursors. These additional materials may be reactive or non-reactive. The defining characteristic of the instant invention is that the reaction product is obtained from the reaction of at least the components listed as disclosed. Non-reactive components may be added to the reaction mixture as diluents or to impart additional properties unrelated to the properties of the composition prepared as a reaction product. Thus for example finely divided solids such as pigments may be dispersed into the reaction mixture, before during or after reaction to produce a reaction product composition that additionally comprises the non-reactive component, e.g. a pigment. Additional reactive components may also be added; such components may react with the initial reactants or they may react with the reaction product; the phrase "reaction product" is intended to include those possibilities as well as including the addition of non-reactive components.

Other optional ingredients may be added in the compositions of the present invention including coupling agents, e.g., silane coupling agents, curing aids, e.g., including activators, retarders and accelerators, processing additives such as oils, plasticizers, tackifying resins, silicas, other fiillers, pigments, fatty acids, zinc oxide, waxes, antioxidants and anti-ozonants, peptizing agents, reinforcing materials such as, for example, carbon black, and so forth. Such additives are selected based upon the intended use and such selection is within the knowledge of one of skill in the art, as are the required amounts of such additives known to one of skill in the art.

Other embodiments of the invention will be apparent to those skilled in the art from a consideration of this specification or practice of the invention disclosed herein. It is intended that the specification and examples be considered as exemplary only, with the true scope and spirit of the invention being defined by the following claims.

Applications for Embodiments of the Invention

### A. Mining and Petroleum Industry

The compositions of the present invention may be utilized in mining and petroleum processing applications, especially as demulsifying agents. Using the compositions of the present invention as a demulsifying agent is accomplished by
i. incorporating a demulsifying-effective amount of at least one composition of the present invention into an emulsion including crude-oil or the like;
ii. allowing the emulsion to separate into at least two phases; and
iii. separating said at least two phases from each other.

As is generally known, emulsions comprise at least two immiscible liquid phases, one of which is continuous and the other, which is discontinuous. Further, emulsions may also contain gases and solids.

One of the immiscible liquids in an emulsion is generally polar, and often water based and the other liquid is generally non-polar, generally defined as an oil phase.

The emulsion can be, for example, a water-in-oil, an oil-in-water emulsion or a multiple phase emulsion. The emulsions particularly considered herein are those wherein the emulsified component is in the form of droplets with droplet sizes in the range of about 0.1 microns up to about 200 microns, more typically about 1-100 microns. The emulsified component can be unstabilized, but is more typically stabilized by a stabilizing amount of a surfactant and/or dispersed particulate solid. Further it is also possible to prepare emulsions of emulsions and these are generally known as multiple emulsions.

The aqueous phase can be essentially pure water, or alternatively, water with varying amounts of solid (particulate) materials, salt or other chemicals.

The oil phase is any hydrophobic phase substantially insoluble with the aqueous phase. For example, the oil phase can be composed of one or more hydrophobic chemicals, typically liquids, which individually or in combination are mainly insoluble in the aqueous phase. Such hydrophobic chemicals can be, for example, linear or branched, cyclic or acyclic, saturated or unsaturated, aliphatic or aromatic hydrocarbons. The hydrocarbons typically contain at least six carbon atoms and can be unsubstituted, or alternatively, substituted with one or more heteroatom-containing group (e.g., hydroxyl, amino, carboxyl, amide, anhydride, ester, or ether groups) as long as the hydrocarbons remain mainly insoluble with the aqueous phase.

Some examples of oil phases include halogenated or non-halogenated C2-C30 hydrocarbons, and more particularly, halogenated or non-halogenated ethenes, butadienes, pentanes, hexanes, heptanes, octanes, benzenes, toluene, ethylbenzenes, xylenes, naphthalene, cresols, naphtha, fats, lubrication oils, petroleum, gasoline, diesel fuel, crude oil, fuel oils, jet fuels, heating oils, cleaning oils, vegetable oils, mineral oils, and tar or bitumen derivatives.

Emulsions can create problems in many industrial applications because the emulsions often do not separate into the liquid components for a prolonged time. In this case typically chemical additives, so-called demulsifying agents, are added to initiate, accelerate and complete the separation process. Demulsifying agents break emulsions and mixtures of polar solutes like water, and non-polar solvents like oil.

Demulsifiers are used to separate emulsions into polar (typically water) and non-polar liquids by incorporating the demulsifying agent into the emulsion. Demulsifiers are known in the art and usually comprise blends of surface-active chemicals. Typical organic demulsifier structures include, but not limited to sulfonates, sulfosuccinates, polyol esters, polyester amines, polymeric elastomers, sulfated polyol ester, oxyalkylated phenolic resins, alkylphenol alkoxylates, amine alkoxylates, quaternary amines, ethoxylated amines, bisamides, polyalkylene glycols, polymerized polyols, resin esters, polyether polyols, resin alkoxylates, modified polyols, polyimine alkoxylates and diepoxides.

Typical silicone demulsifiers include, but not limited to copolymers of polydimethylsiloxanes and polyalkylane oxides (silicone polyethers), alkylsilicones and alkylsilicone polyethers, arylsilicones and arylsilicone polyethers, aralkylsilicones and aralkylsilicone polyethers, organosilanes, alkoxysilanes.

However, despite the large number of demulsifiers available on the market, it is not possible to break all of the occurring petroleum/water emulsions rapidly, safely, efficiently, and with small quantities of addition products.

The reaction products described in the present invention can be used as demulsifying agents alone or accompanied by additional silicone and/or organic demulsifiers and these components can be utilized in the form of a blend, a solution, a dispersion, or either an oil-in-water or a water-in-oil emulsion or microemulsion or the various demulsifying agents can be added separately. When applied in solution suitable solvents can be selected from linear or branched, cyclic or acyclic, saturated or unsaturated, aliphatic or aromatic hydrocarbons, alcohol, ketones, esters, ethers and their blends or whatever solvent is commonly used in the particular application.

When the organic and/or silicone demulsifier is included, the weight ratio of the compositions of the present invention to the organic and silicone demulsifier is typically in the range of about 100:1 to about 1:1000, more typically in the range of about 5:1 to about 1:200.

The method of separating emulsions comprises the incorporation of a demulsifying-effective amount of demulsifier into the emulsion, allowing the emulsion to separate into at least two phases and separating these at least two phases from each other. The incorporation of the demulsifier into the emulsion to be separated can be achieved by any method known in the art for integrally mixing the demulsifier with the emulsion. The mixing procedure can use, for example, standard mixers, high-speed mixers or blenders, or shakers. The temperature can be unadjusted within room temperature limits (∼20-30°C), or adjusted as required, for example, to 40-150°C for a suitable amount of time.

A typical application of the compositions in the present invention is the separation of crude oil emulsions. During extraction and production of crude oil, water or brine gets emulsified into the crude oil yielding a water-in-oil emulsion, which can be unstabilized or stabilized by surface active materials, organic solids, such as asphaltenes and resins, or inorganic solids. This water-in-oil emulsion gives rise to several down-stream problems; corrosion during refinery processes and greater energy requirement to pump the more viscous emulsion are to name a few. Thus, demulsifiers are extensively used in the petroleum industry, to break water-in-oil and oil-in-water emulsions; and before transportation, refining or processing the water content of the crude oil has to be reduced to pipeline specification levels (typically less then 0.05-2%) and this is typically achieved by injecting demulsifiers into the well, into the crude oil stream, at the separation equipment or at any other suitable points.

The non-crosslinked copolymers of the present invention will cause improved demulsifying action as demulsifying agents in the Mining and Petroleum Industry, both in the oil field and refineries, including, but not limited to desalters; bitumen extraction from oils sands (separating bitumen froth and solvent diluted bitumen emulsions); in the separation of waste oils, slop oils, sludges, such as oily waste from desalters, waste water skimmings, refinery and petrochemical plant waste (tank bottom washes, coker drum waste, "dirty bleeds" etc.), steel and aluminum industrial waste, including synthetic lubes, high lithium grease, lube oil from rollers, metalworking fluid waste and paper plant waste.

Dehazing (demulsification) of lubrication oils and lubrication oil waste, such as automotive waste (motor oil etc.), bunker oil are also possible applications of the reaction products in the present invention.

Another typical industrial use of the reaction products in the present invention is diesel fuel (including bio-diesel) dehazing when the demulsifier eliminates small amount of emulsified water from the diesel fuel and diesel fuel antifoaming.

The reaction product of the present invention will improve ore recovery from mining operations. The addition of the present invention to mining processes such as flocculation, separation, purification, concentration, leaching & chemical extraction improves the separation of minerals from their gangue.

Further applications of the copolymers in the present invention in oil and gas include asphaltene dispersants and drag reduction.

### B. Water Processing

Compositions comprising the non-crosslinked copolymers of the present invention are useful for applications involving commercial and industrial open recirculating cooling water towers, closed cooling water systems, cooling water conduits, heat exchangers, condensers, once-through cooling systems, Pasteurizers, air washers, heat exchange systems, air conditionsing/ humidifiers/dehumidifiers, hydrostatic cookers, safety and/or fire water protection storage systems, water scrubbers, disposal wells, influent water systems, including filtration and clarifiers, wastewater treatment, wastewater treatment tanks, conduits, filtration beds, digesters, clarifiers, holding ponds, settling lagoons, canals, odor control, ion exchange resin beds, membrane filtration, reverse osmosis, micro- and ultra-filtration, assisting in the removal of biofilms in cooling tower applications, heat exchangers and process water systems, and the like.

### Synthetic Examples:

### Preparation example A:

An epoxy encapped polyether (84.78 g) with the average structure of CH₂(O)CHCH₂O(CH₂CH₂O)_{13.6}CH₂CH(O)CH₂, 3-aminopropyltrimethylsilane (51.72 g) and isopropanol (50.00 g) were combined in a 250 mL round bottom flask. The solution was heated to reflux and stirred with a magnetic stirrer for 18 hrs. The reaction was allowed to remain at reflux until all the epoxy groups were consumed as determined by titration. The resulting material exhibited a dark straw color. The material was transferred to a rotary evaporator and stripped at 70°C and 4 Torr (533,29 Pa) for 2 hrs to remove the isopropanol. A non-crosslinked liquid was obtained with a viscosity of 66,000 cP (66 Pa s) at ambient temperature.

### Preparation example B:

An epoxy encapped polyether (81.8 g) with the average structure of CH₂(O)CHCH₂O(CH₂CH₂O)_{13.6}CH₂CH(O)CH₂, 3-aminopropyltrimethylsilane (18.2 g) and isopropanol (50.00 g) were combined in a 250 mL round bottom flask. The solution was heated to reflux and stirred with a magnetic stirrer for 18 hrs. The reaction was allowed to remain at reflux until all the epoxy groups were consumed as determined by titration. The resulting material exhibited a dark straw color. The material was transferred to a rotary evaporator and stripped at 70°C and 4 Torr (533,29 Pa) for 2 hrs to remove the isopropanol. A non-crosslinked liquid was obtained with a viscosity of 8150 cP (8,15 Pa s) at ambient temperature.

### Preparation example C:

An epoxy encapped polyether (135.88 g) with the average structure of CH₂(O)CHCH₂O(CH₂CH₂O)_{13.6}CH₂CH(O)CH₂, 3-aminopropyl-1,1,1,3,5,5,5-heptamethyltrisiloxane (64.38 g) and isopropanol (150.00 g) were combined in a 500 mL round bottom flask. The solution was heated to reflux and stirred with a magnetic stirrer for 24 hrs. The reaction was allowed to remain at reflux until all the epoxy groups were consumed as determined by titration. The resulting material exhibited a dark straw color. The material was transferred to a rotary evaporator and stripped at 70°C and 4 Torr (533,29 Pa) for 2 hrs to remove the isopropanol. A non-crosslinked liquid was obtained with a viscosity of 3720 cP (3,72 Pa s) at ambient temperature.

### Preparation example D:

An epoxy encapped polyether (62.52 g) with the average structure of CH₂(O)CHCH₂O(CH₂CH₂O)_{13.6}CH₂CH(O)CH₂, 3-aminopropyltris(trimethylsiloxy)silane (37.48 g) and isopropanol (50.00 g) were combined in a 250 mL round bottom flask. The solution was heated to reflux and stirred with a magnetic stirrer for 20 hrs. The reaction was allowed to remain at reflux until all the epoxy groups were consumed as determined by titration. The resulting material exhibited a dark straw color. The material was transferred to a rotary evaporator and stripped at 70°C and 4 Torr (533,29 Pa) for 2 hrs to remove the isopropanol. A non-crosslinked liquid was obtained with a viscosity of 5000 cP (5,0 Pa s) at ambient temperature.

### Preparation example E:

An epoxy encapped polyether (67.85 g) with the average structure of CH₂(O)CHCH₂O(CH₂CH₂O)_{13.6}CH₂CH(O)CH₂, 3-aminopropyl-1,1,1,3,5,5,5-heptamethyltrisiloxane (25.72 g), 1,3-bis(aminopropyl)-1,1,3,3-tetramethyldisiloxane (1.43 g), diethanolamine (1.21 g) and isopropanol (100.00 g) were combined in a 250 mL round bottom flask. The solution was heated to reflux and stirred with a magnetic stirrer for 24 hrs. The reaction was allowed to remain at reflux until all the epoxy groups were consumed as determined by titration. The resulting material exhibited a dark straw color. The material was transferred to a rotary evaporator and stripped at 70°C and 4 Torr (533,29 Pa) for 2 hrs to remove the isopropanol. A non-crosslinked liquid was obtained with a viscosity of 6600 cP (6,0 Pa s) at ambient temperature.

### Testing examples:

The following test examples illustrate the use of the non-crosslinked copolymers in the present invention as demulsifying agents.

### Test method:

The following test method was used to evaluate demulsifiers:

Crude oil emulsions were tested near to the wells, making sure that the samples were not older than three days. After homogenizing the sample by hand shaking, one hundred ml of crude oil emulsion was carefully poured into prescription glass bottles, which had marks at 10 ml intervals.

The silicone demulsifiers were diluted to 10% with xylene. First, the bottles with the crude oil sample were heated for 10 min in a water bath to the required temperature. Then the demulsifier was added with a micro syringe and the bottles were homogenized by hand-shaking fifty times and then placed back to the bath. In regular intervals the jars were taken out of the water bath and the quality of the water/crude oil interface was inspected and the volume in percent (%) of the separated water phase (water drop) was measured.
After the required separation time the water content of the separated crude oil was measured by centrifugation. About 15 ml sample was extracted from the top third of the oil phase with a syringe and then poured into 12.5 ml conical-bottom, graduated glass centrifuge tubes up to the 50% mark and then diluted up to 100% with xylene and homogenized by hand-shaking. The diluted samples were then centrifuged for five minutes at 1500 rpm with a standard laboratory centrifuge. The percentage of separated water (W1,"free water") and the percentage of the middle, emulsion phase (BS, "bottom sediment") were recorded. The amount of total water (W2) was measured by adding 1-2 drops of "knockout dropper" (DM046 from Baker Petrolite, Sugar Land, TX, USA) and mixing the emulsion followed by centrifugation as above. The difference of total water and free water, ΔW=W2-W1, is the "unresolved emulsion". It is highly desirable to minimize the amount of unresolved emulsion (ΔW) and bottom sediments (BS) in order to achieve a smooth and efficient separation process.

The quality of the interface between the separated water and crude oil phases and the quality of the separated water phase were also evaluated and graded, as "G" meaning good or "B", meaning bad. A good interface is generally soft and flat and a good water phase is clean, nearly transparent.

### Test example 1.

### Bottle tests with heavy (15 °API) crude from the Middle East, at 60 °C

This crude oil was not only heavy, but also high in sulphur. In the separation process the crude oil is transferred from collection sub-centers to the main treatment center in a settling tank at ambient temperature, then it is heated at 60-65 °C. The treatment time is maximum 4 hours in the sub-centers, and the total treatment time is 18-20 hours. Currently an organic demulsifier package, "Org A", with 40-50% actives content, is used, at about 65 ppm dosage. Table 1 shows the test results at 60 °C. The crude oil emulsion had the following properties: W1=0.8% (free water), W2=26% (total water) and BS=30% (bottom solids).

**Table 1. Bottle tests with heavy crude (15 °API) oil from the Middle East, at 60 °C**

| # | Demulsifier | Blending ratio, ppm-actives | Dosage ppm actives | WATER DROP, % | | | | TOP CUT (80%), | | | BS |
|---|---|---|---|---|---|---|---|---|---|---|---|
| | | | | 60°C | 60°C | 60°C | 60°C | | | | |
| | | | | 30 min | 1 hr | 3 hr | 19 hr | W1 | W2 | ΔW | |
| 1 | Blank | | 0 | 0 | 0 | 0 | TR | - | - | | |
| 2 | Org A | | 52.5 | 0 | 1 | 3 | 8 | 0.8 | 14 | 13.2 | 12.0 |
| 3 | Org A | | 105 | 0 | 3 | 8 | 11 | 0.4 | 13 | 12.6 | 12.0 |
| 4 | Org A+ Example D | 50+2.5 | 52.5 | 0 | 1 | 4 | 10 | 6.2 | 15 | 8.8 | 7.6 |
| 5 | Org A+ Example D | 100+5 | 105 | 0 | 3 | 5 | 10 | 8 | 14 | 6 | 4.0 |
| 6 | Org A+ Example C | 50+2.5 | 52.5 | 0 | 1 | 4 | 10 | 9 | 16 | 7 | 3.0 |
| 7 | Org A+ Example C | 100+5 | 105 | 0 | 3 | 6 | 11 | 8 | 13 | 5 | 2.0 |

The table shows that 5% of Example C and D silicone copolymers significantly reduced ΔW, the unresolved emulsion, and BS, the bottom sediments, compared to the case when only Org A is used. This effect can greatly improve the separation process.

### Test example 2.

### Bottle tests with heavy (15 °API) crude from the Middle East, at 40 °C

The same crude emulsion as in Test example 1 was also tested at 40 °C and Table 2 shows the results.

**Table 2. Bottle tests with heavy crude (15 °API) oil from the Middle East, at 40 °C.**

| # | Demulsifier | Blending ratio, ppm-actives | Total Dose ppm | WATER DROP, % | | | | | TOP CUT (80%), | | | BS |
|---|---|---|---|---|---|---|---|---|---|---|---|---|
| | | | | 40°C | 40°C | 40°C | Water | Interface | | | | |
| | | | | 30 min | 60 min | 18 hr | | | W1 | W2 | ΔW | |
| 1 | Blank | | 0 | 0 | 0 | 0 | B | B | 0 | 24 | 24 | 30.0 |
| 2 | Org A | | 52.5 | 0 | 0 | 3 | B | B | 6 | 20 | 14 | 15.0 |
| 3 | Org A | | 105 | 0 | 0 | 5 | B | B | 7 | 20 | 13 | 13.0 |
| 4 | Org A+ Example D | 50+2.5 | 52.5 | 0 | 0 | 4 | B | B | 7 | 24 | 17 | 15.0 |
| 5 | Org A+ Example D | 100+5 | 105 | 0 | 0 | 7 | B | B | 6 | 18 | 12 | 14.0 |
| 6 | Org A+ Example C | 50+2.5 | 52.5 | 0 | 0 | 6 | B | B | 7 | 18 | 11 | 13.0 |
| 7 | Org A+ Example C | 100+5 | 105 | 0 | 0 | 8 | B | B | 8 | 18 | 10 | 12.0 |

### Test example 3.

### Bottle tests with heavy (25 °API) crude from the Middle East, at ambient temperature.

This crude oil was less heavy than in Test examples 1-2, but also high in sulphur (3.9%), with 6% asphaltene content. It is separated with a similar process as the one on Test examples 1-2. A problem of the process is to handle the rag layer, and therefore faster separation and low level of bottom sediments (BS) are needed.

The crude emulsion sample had the following properties: W1=16%, W2=20% and BS=32%. In this test only the water drop was measured. Org B and Org C were organic demulsifiers, both polyether polyols.

**Table 3. Bottle tests with heavy (25 °API) crude from the Middle East, at ambient temperature**

| # | Demulsifier | Dosage ppm actives | WATER DROP, % | | | |
|---|---|---|---|---|---|---|
| | | | 10 min | 30 min | 60 min | 120 min |
| 1 | Example D | 125 | 0 | 15 | 21 | 21 |
| 2 | Example C | 125 | tr | 12 | 19 | 20 |
| 3 | Example A | 125 | tr | tr | | |
| 4 | Example B | 125 | 0 | 0 | | |
| 5 | Org B | 125 | 3 | 3 | | |
| 6 | Org C | 125 | 0 | 0 | | |
| 7 | Org A | 250 | 4 | 4 | | |
| 8 | BLANK | 0 | 0 | 0 | | |

### Test example 4.

### Bottle tests with heavy (25 °API) crude from the Middle East, at 40 °C

A more detailed test was conducted with another crude emulsion sample, taken from the same field as in Test example 3, at 40 °C, for 18 hours and Table 4 shows the results. Org D and E are organic demulsifiers, which gave good performance on the field. Org D contains a blend of alkylphenol alkoxylates and amine alkoxylates, and Org E is a mixture of alkoxylate phenolic resin and modified polyol.

**Table 4. Bottle tests with heavy (25 °API) crude from the Middle East, at 40 °C**

| # | Demulsifier | Blending ratio, ppm actives | Total Dose ppm | WATER DROP, % | | | | | | Water | Interf ace | TOP CUT (80%) | | | BS |
|---|---|---|---|---|---|---|---|---|---|---|---|---|---|---|---|
| | | | | 40°C | 40°C | 40°C | 40°C | 40°C | 40°C | | | | | | |
| | | | | 10 min | 15 min | 30 min | 60 min | 2 hr | 18 hr | | | W1 | W2 | ΔW | |
| 1 | Blank | | | 0 | 0 | 0 | 0 | 0 | 3.0 | | | - | - | - | - |
| 2 | Org A | | 50 | TR* | 4 | 18 | 24 | 29 | 36.0 | B | B | 0 | 9 | 9 | 8.0 |
| 3 | Org A+ Example D | 47.5+2.5 | 50 | 4 | 8 | 27 | 29 | 30 | 35.0 | B | B | 2.2 | 11 | 8.8 | 7.8 |
| 4 | Org A+ Example D | 48.5+1.5 | 50 | 2 | 4 | 24 | 28 | 31 | 33.0 | B | B | 0.4 | 14 | 13.6 | 10.6 |
| 5 | Org A | | 100 | 10 | 25 | 33 | 33 | 33 | 40.0 | B | G | 0 | 1.6 | 1.6 | 0.8 |
| 6 | Org A+ Example D | 97.0+3.0 | 100 | 12 | 29 | 34 | 36 | 35 | 41.0 | B | G | 0.4 | 0.8 | 0.4 | 0.0 |
| 7 | Org A+ Example D | 95.0+5.0 | 100 | 20 | 34 | 38 | 38 | 38 | 43.0 | G | G | 0.4 | 0.8 | 0.4 | 0.0 |
| 8 | Org D | | 100 | 4 | 11 | 28 | 29 | 31 | 32.0 | G | G | 0.4 | 13 | 12.6 | 10.0 |
| 9 | Org D | | 50 | 0 | 2 | 20 | 22 | 23 | 28.0 | B | G | 2.2 | 21 | 18.8 | 12.0 |
| 10 | Org E | | 100 | 7 | 20 | 22 | 23 | 24 | 39.0 | B | G | 0 | 4.4 | 4.4 | 4.8 |
| 11 | Org E | | 50 | 2 | 10 | 19 | 20 | 19 | 22.0 | B | G | 0 | 24 | 24 | 26.0 |

### Test example 5.

### Bottle tests with heavy (25 °API) crude from the Middle East, at 40 °C

Another test was conducted with a new sample taken from the same field as in Test examples 3-4, at 40 °C and Table 5 shows the results. The crude emulsion sample had the following properties: W1=14%, W2=50% and BS=35%.

**Table 5. Bottle tests with heavy (25 °API) crude from the Middle East, at 40 °C**

| # | Demulsifier | Ratio | Dosage ppm actives | WATER DROP, % | | | TOP CUT (80%) | | Water quality | Interface quality | BS |
|---|---|---|---|---|---|---|---|---|---|---|---|
| | | | | 10 min | 30 min | 1 hour | W1 | W2 | | | |
| 1 | Org A | | 100 | 0 | 15 | 25 | 0 | 7 | B | B | 8 |
| 2 | Org A + Example D | 9:1 | 90+10 | 14 | 42 | 43 | 6 | 7 | B | B | 2 |
| 3 | Org D | | 100 | 9 | 41 | 42 | 2.4 | 14 | B | G | 7.6 |
| 4 | Org D+ Example D | 9:1 | 90+10 | 15 | 43 | 44 | 4 | 12 | Improved | G | 5 |

### Test example 6.

### Bottle tests with heavy (25 °API) crude from the Middle East, at 40 °C

Another test was conducted with a new sample taken from the same field as in Test examples 3-5, at 40 °C and Table 6 shows the results. The crude emulsion sample had the following properties: W1=10% and W2=48%.

**Table 6. Bottle tests with heavy (25 °API) crude from the Middle East, at 40 °C**

| # | Demulsifier | Ratio | Dosage ppm actives | WATER DROP, % | | | | | Water quality | Interface quality | TOP CUT (80 %) | | | BS |
|---|---|---|---|---|---|---|---|---|---|---|---|---|---|---|
| | | | | 40°C | 40°C | 40°C | 35°C | 40°C | | | | | | |
| | | | | 30 min | 60 min | 90 min | 3 hr | 4hr | | | W1 | W2 | ? W | |
| 1 | Org A | | 50 | 11 | 20 | 22 | 22 | 25 | G | B | 0.4 | 20.0 | 19.6 | 15.0 |
| 2 | Org A + Example D | 47.5+2.5 | 50 | 13 | 22 | 20 | 23 | 27 | G | G | 0.8 | 17.0 | 16.2 | 13.0 |
| 3 | Org A + Example C | 47.5+2.5 | 50 | 11 | 23 | 23 | 23 | 29 | G | B | 0.4 | 17.0 | 16.6 | 13.0 |
| 4 | Org A + Example E | 47.5+2.5 | 50 | 5 | 16 | 20 | 23 | 29 | B | G | 0.8 | 18.0 | 17.2 | 13.0 |
| 5 | Org A | | 100 | 24 | 28 | 30 | 28 | 34 | B | B | 0.2 | 13.0 | 12.8 | 11.0 |
| 6 | Org A + Example D | 95+5 | 100 | 28 | 25 | 29 | 28 | 34 | B | B | 4.0 | 10.0 | 6.0 | 4.0 |
| 7 | Org A + Example C | 95+5 | 100 | 27 | 27 | 29 | 31 | 32 | G | G | 3.0 | 9.0 | 6.0 | 5.0 |
| 8 | Org A + Example E | 95+5 | 100 | 23 | 27 | 25 | 27 | 34 | B | B | 0.2 | 4.8 | 4.6 | 4.0 |

### Test example 7.

### Bottle tests with heavy (25 °API) crude from the Middle East, at 40 °C.

Another test was conducted with a new sample taken from the same field as in Test examples 3-6, at 40 °C and Table 7 shows the results. The crude emulsion sample had the following properties: W1=19% and W2=46%.

**Table 7. Bottle tests with heavy (25 °API) crude from the Middle East, at 40 °C**

| # | **Demulsifier** | **Dose ppm** | **WATER DROP, %** | | | | **TOP CUT (80%),** | | |
|---|---|---|---|---|---|---|---|---|---|
| | | | **40°C** | **40°C** | **40°C** | **40°C** | | | |
| | | | **5min** | **15 min** | **30 min** | **120 min** | **W1** | **W2** | **ΔW** |
| 1 | **Org F** | **60** | 1 | 7 | 15 | 30 | 2.4 | 20.0 | 17.6 |
| 2 | **Org F** | **80** | 2 | 10 | 20 | 32 | 4 | 18 | 14 |
| 3 | **Org F** | **100** | 2 | 15 | 30 | 37 | 5.6 | 17 | 11.4 |
| 4 | **Org F** | **120** | 2 | 14 | 33 | 37 | 4.4 | 13 | 8.6 |
| 5 | **Org F** | **140** | 6 | 20 | 38 | 40 | 6 | 12 | 6 |
| 6 | **Org F+Example C** | **50+2.5** | 3 | 10 | 26 | 30 | 3.2 | 22 | 17.8 |
| 7 | **Org F+Example D** | **50+2.5** | 2 | 12 | 28 | 31 | 6 | 20 | 14 |
| 8 | **Org F+Example C** | **100+5** | 6 | 25 | 36 | 38 | 4 | 10 | 6 |
| 9 | **Org F+Example D** | **100+5** | 6 | 25 | 37 | 39 | 4 | 11 | 7 |
| 10 | **Org F+Example C** | **100+10** | 7 | 22 | 39 | 40 | 8 | 12 | 4 |
| 11 | **Org F+Example D** | **100+10** | 9 | 31 | 35 | 40 | 6 | 14 | 9 |
| 12 | **Org E** | **60** | Tr | 4 | 20 | 21 | 4 | 26 | 22 |
| 13 | **Org E** | **80** | 1 | 16 | 30 | 32 | 4 | 20 | 16 |
| 14 | **Org E** | **100** | 2 | 20 | 31 | 33 | 2 | 19 | 17 |
| 15 | **Org E** | **120** | 2 | 23 | 35 | 37 | 2.0 | 15.0 | 13.0 |
| 16 | **Org E** | **140** | 4 | 27 | 37 | 39 | 2.4 | 16.0 | 13.6 |
| 17 | **Org E+Example C** | **50+2.5** | 0 | 10 | 22 | 28 | 4.0 | 26.0 | 22.0 |
| 18 | **Org E+Example D** | **50+2.5** | 1 | 10 | 23 | 27 | 4.0 | 24.0 | 20.0 |
| 19 | **Org E+Example C** | **100+5** | 1 | 21 | 38 | 40 | 1.6 | 13.0 | 10.4 |
| 20 | **Org E+Example D** | **100+5** | 2 | 22 | 35 | 39 | 1.6 | 12.0 | 10.4 |
| 21 | **Org E+Example C** | **100+10** | 2 | 16 | 35 | 39 | 2.4 | 13.0 | 10.4 |
| 22 | **Org E+Example D** | **100+10** | 1 | 21 | 35 | 37 | 2.0 | 12.0 | 10.0 |

These test examples demonstrate that the reaction products of the present invention give good separation of crude oil emulsions, and they improve the performance of organic demulsifiers.

It will be understood that any numerical range recited herein includes all sub-ranges within that range and any combination of the various endpoints of such ranges or sub-ranges.

It will be further understood that any compound, material or substance which is expressly or implicitly disclosed in the specification and/or recited in a claim as belonging to a group of structurally, compositionally and/or functionally related compounds, materials or substances includes individual representatives of the group and all combinations thereof.

Other embodiments of the invention will be apparent to those skilled in the art from a consideration of this specification or practice of the invention disclosed herein. It is intended that the specification and examples be considered as exemplary only, with the true scope and spirit of the invention being defined by the following claims.

## Claims

1. A demulsifying composition comprising the non-crosslinked reaction product of
(I) an oxirane or oxetane compound (I) comprising at least two oxirane or oxetane groups, which is a polyether; and
(II) a compound (II) comprising silicon and one or more amino groups, which is selected from the group consisting of siloxanes having the formula:
MₐₐM^{A}_{bb}M^{PE}_{cc}M^{H}_{dd}D_{ff}D^{A}_{gg}D^{PE}ₕₕD^{H}ᵢᵢTⱼⱼT^{A}ₖₖT^{PE}ₗₗT^{H}ₘₘQₙₙ
with
M = R¹⁵R¹⁶R¹⁷SiO_{1/2};
M^{H} = R¹⁵R¹⁶HSiO_{1/2};
M^{PE} = R¹⁵R¹⁶(-CH₂CH(R¹⁸)(R¹⁹)ₒₒ(C₂H₄O)ₚₚ(C₃H₆O)_{qq}(C₄H₈O)ᵣᵣR²⁰)SiO_{1/2};
M^{A} = R¹⁵R¹⁶(R^{A})SiO_{1/2};
D = R¹⁵R¹⁶SiO_{2/2};
D^{H} = R¹⁵HSiO_{2/2};
D^{PE} = R¹⁵(-CH₂CH(R¹⁸)(R¹⁹)ₒₒ(C₂H₄O)ₚₚ(C₃H₆O)_{qq}(C₄H₈O)ᵣᵣR²⁰)SiO_{2/2};
D^{A} = R¹⁵(R^{A})SiO_{2/2};
T = R¹⁵SiO_{3/2};
T^{H} = HSiO_{3/2};
T^{PE} = (-CH₂CH(R¹⁸)(R¹⁹)ₒₒ(C₂H₄O)ₚₚ(C₃H₆O)_{qq}(C₄H₈O)ᵣᵣR²⁰)SiO_{3/2};
T^{A} = R^{A}SiO_{3/2};
Q = SiO_{4/2};
wherein
R¹⁵, R¹⁶ and R¹⁷ are each independently selected from the group of monovalent hydrocarbon radicals having from 1 to 60 carbon atoms,
R¹⁸ is H or a 1 to 6 carbon atom alkyl group,
R¹⁹ is a divalent hydrocarbon radical of 1 to 6 carbons,
R²⁰ is selected from the group consisting of H, monofunctional
hydrocarbon radicals of 1 to 6 carbons, and acetyl;
R^{A} is independently a monovalent hydrocarbon radical containing one or more amino moieties having from 1 to 60 carbon atoms;
the subscript aa is 0 to 5;
the subscript bb is 0 to 5;
the subscript ff is 0 to 200;
the subscript gg is 0 to 20;
the subscript jj is 0 to 10;
the subscript kk is 0 to 5;
the subscript nn is 0 to 5;
the subscript cc is 0 to 5;
the subscript hh is 0 to 50;
the subscript ll is 0 to 5;
the subscript dd is 0 to 2;
the subscript ii is 0 to 5;
the subscript mm is 0 to 5;
the subscript oo is 0 or 1;
the subscript pp is 0 to 100;
the subscript qq is 0 to 100; and
the subscript rr is 0 to 100;
subject to the limitations that
the sum of the subscripts bb, gg and kk is greater than 1; and
(pp + qq + rr) > 0; and, optionally
(III) a polyamine (III); and
(IV) a secondary amine (IV).

2. The demulsifying composition of claim 1 wherein the oxirane or oxetane compound (I) has the formula:
R¹²O(C₂H₄O)_{w}(C₃H₆O)ₓ(C₄H₈O)_{y}R¹³
where
R¹² and R¹³ are independently a monovalent hydrocarbon radical containing one or more oxirane or oxetane moieties having from 2 to 12 carbon atoms;
the subscript w is 0 to 100;
the subscript x is 0 to 100;
the subscript y is 0 to 100;
subject to the limitation that (w+x+y)>0.

3. The demulsifying composition of claim 2 wherein compound (I) and compound (II) are reacted in the presence of polyamine compound (III) to produce said reaction product, said polyamine compound (III) having the formula:
N(R²¹)(R²²)A[N(R²³)(R²⁴)]_{zz}
where
R²¹, R²², R²³ and R²⁴ are independently chosen from the group consisting of H or a monovalent hydrocarbon radical having 1 to 20 carbon atoms;
A is selected from a group consisting of a divalent linear or branched hydrocarbon radical having 1 to 60 carbons or a divalent polydialkyl- siloxane radical, optionally containing S, O or N; and
subscript zz is 1 to 20.

4. The demulsifying composition of claim 1 wherein the reaction product has the following formula: 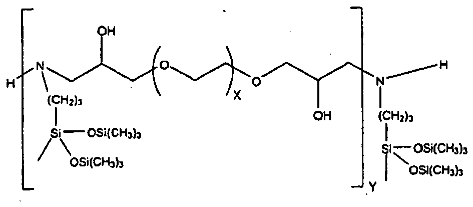 wherein
X is 5 to 30 and
Y is 2 to 100.

5. An emulsion comprising the demulsifying composition of any preceding claim.

6. The demulsifying composition of any one of claims 1 to 4 further comprising at least one other ingredient selected from the group consisting of additional silicone and organic demulsifiers.

7. A method for separating emulsions comprising:
(i) incorporating a demulsifying-effective amount of the demulsifying composition of any one of claims 1 to 4 into an emulsion;
(ii) allowing the emulsion to separate into at least two phases; and
(iii) separating said at least two phases from each other.

8. The method of claim 7 wherein the emulsion contains crude-oil.

## Patentansprüche

1. Demulgierende Zusammensetzung, umfassend das nicht vernetzte Reaktionsprodukt von:
(I) einer Oxiran- oder Oxetan-Verbindung (I) mit mindestens zwei Oxiranoder Oxetan-Gruppen, die ein Polyether ist; und
(II) einer Verbindung (II), welche Silicium und eine oder mehrere Amino-Gruppen umfasst, die gewählt wird aus der Gruppe bestehend aus Siloxanen mit der Formel:
MₐₐM^{A}_{bb}M^{PE}_{cc}M^{H}_{dd}D_{ff}D^{A}_{gg}D^{PE}ₕₕD^{H}ᵢᵢTⱼⱼT^{A}ₖₖT^{PE}ₗₗT^{H}ₘₘQₙₙ
mit
M = R¹⁵R¹⁶R¹⁷SiO_{1/2};
M^{H} = R¹⁵R¹⁶HSiO_{1/2};
M^{PE} = R¹⁵R¹⁶(-CH₂CH(R¹⁸)(R¹⁹)ₒₒ(C₂H₄O)ₚₚ(C₃H₆O)_{qq}(C₄H₈O)ᵣᵣR²⁰)SiO_{1/2};
M^{A} = R¹⁵R¹⁶(R^{A})SiO_{1/2};
D = R¹⁵R¹⁶SiO_{2/2};
D^{H} = R¹⁵HSiO_{2/2};
D^{PE} = R¹⁵(-CH₂CH(R¹⁸)(R¹⁹)ₒₒ(C₂H₄O)ₚₚ(C₃H₆O)_{qq}(C₄H₈O)ᵣᵣR²⁰)SiO_{2/2};
D^{A} = R¹⁵(R^{A})SiO_{2/2};
T = R¹⁵SiO_{3/2};
T^{H} = HSiO_{3/2};
T^{PE} = (-CH₂CH(R¹⁸)(R¹⁹)ₒₒ(C₂H₄O)ₚₚ(C₃H₆O)_{qq}(C₄H₈O)ᵣᵣR²⁰)SiO_{3/2};
T^{A} = R^{A}SiO_{3/2};
Q = SiO_{4/2};
wobei
R¹⁵, R¹⁶ und R¹⁷ jeweils unabhängig aus der Gruppe von monovalenten Kohlenwasserstoffradikalen mit 1 bis 60 Kohlenstoffatomen gewählt sind,
R¹⁸ H oder eine Alkylgruppe mit 1 bis 6 Kohlenstoffatomen ist,
R¹⁹ ein bivalentes Kohlenwasserstoffradikal mit 1 bis 6 Kohlenstoffen ist,
R²⁰ aus der Gruppe bestehend aus H, monofunktionellen Kohlenwasserstoffradikalen mit 1 bis 6 Kohlenstoffen und Acetyl gewählt ist;
R^{A} unabhängig ein monovalentes Kohlenwasserstoffradikal ist, das ein oder mehrere Amino-Moietäten mit 1 bis 60 Kohlenstoffatomen enthält;
die Tieferstellung aa 0 bis 5 ist;
die Tieferstellung bb 0 bis 5 ist;
die Tieferstellung ff 0 bis 200 ist;
die Tieferstellung gg 0 bis 20 ist;
die Tieferstellung jj 0 bis 10 ist;
die Tieferstellung kk 0 bis 5 ist;
die Tieferstellung nn 0 bis 5 ist;
die Tieferstellung cc 0 bis 5 ist;
die Tieferstellung hh 0 bis 50 ist;
die Tieferstellung ll 0 bis 5 ist;
die Tieferstellung dd 0 bis 2 ist;
die Tieferstellung ii 0 bis 5 ist;
die Tieferstellung mm 0 bis 5 ist;
die Tieferstellung oo 0 oder 1 ist;
die Tieferstellung pp 0 bis 100 ist;
die Tieferstellung qq 0 bis 100 ist; und
die Tieferstellung rr 0 bis 100 ist;
vorbehaltlich der Einschränkungen, dass
die Summe der Tieferstellungen bb, gg und kk größer als 1 ist; und
(pp + qq + rr) > 0; und optional
(III) einem Polyamin (III); und
(IV) einem sekundären Amin (IV).

2. Demulgierende Zusammensetzung nach Anspruch 1, wobei die Oxiran- oder Oxetan-Verbindung (I) die Formel:
R¹²O(C₂H₄O)_{w}(C₃H₆O)ₓ(C₄H₈O)_{y}R¹³
aufweist,
wobei
R¹² und R¹³ unabhängig ein monovalentes Kohlenwasserstoffradikal sind, das ein oder mehrere Oxiran- oder Oxetan-Moietäten mit 2 bis 12 Kohlenstoffatomen enthält;
die Tieferstellung w 0 bis 100 ist;
die Tieferstellung x 0 bis 100 ist;
die Tieferstellung y 0 bis 100 ist;
vorbehaltlich der Einschränkung, dass (w+x+y)>0.

3. Demulgierende Zusammensetzung nach Anspruch 2, wobei die Verbindung (I) und die Verbindung (II) bei Vorhandensein einer Polyamin-Verbindung (III) reagiert werden, um das Reaktionsprodukt zu erzeugen, wobei die Polyamin-Verbindung (III) die Formel:
N(R²¹)(R²²)A[N(R²³)(R²⁴)]_{zz}
aufweist,
wobei
R²¹, R²², R²³ und R²⁴ unabhängig aus der Gruppe bestehend aus H oder einem monovalenten Kohlenwasserstoffradikal mit 1 bis 20 Kohlenstoffatomen gewählt sind;
A aus einer Gruppe bestehend aus einem bivalenten linearen oder verzweigten Kohlenwasserstoffradikal mit 1 bis 60 Kohlenstoffen oder einem bivalenten Polydialkyl-Siloxan-Radikal, das optional S, O oder N enthält, gewählt ist; und
die Tieferstellung zz 1 bis 20 ist.

4. Demulgierende Zusammensetzung nach Anspruch 1, wobei das Reaktionsprodukt die folgende Formel aufweist: 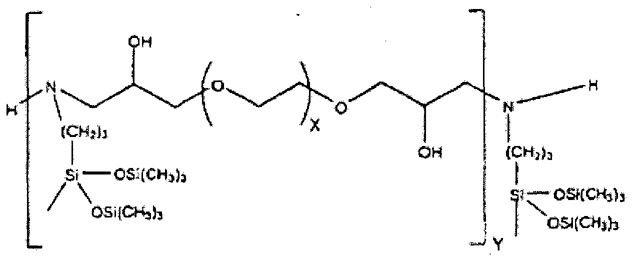 wobei
X 5 bis 30 ist und
Y 2 bis 100 ist.

5. Emulsion, die die demulgierende Zusammensetzung nach einem vorhergehenden Anspruch umfasst.

6. Demulgierende Zusammensetzung nach einem der Ansprüche 1 bis 4, welche weiterhin mindestens einen anderen Bestandteil gewählt aus der Gruppe bestehend aus zusätzlichen Silikon- und organischen Demulgatoren umfasst.

7. Verfahren zum Spalten von Emulsionen, welches umfasst:
(i) Aufnehmen einer demulgierend wirksamen Menge der demulgierenden Zusammensetzung nach einem der Ansprüche 1 bis 4 in eine Emulsion;
(ii) Spaltenlassen der Emulsion in mindestens zwei Phasen; und
(iii) Spalten der mindestens zwei Phasen voneinander.

8. Verfahren nach Anspruch 7, wobei die Emulsion Rohöl enthält.

## Revendications

1. Composition désémulsionnante comprenant le produit de réaction non-réticulée de
(I) un composé oxyrane ou oxétane (I) comprenant au moins deux groupes oxyranes ou oxétanes, qui est un polyéther ; et
(II) un composé (II) comprenant du silicium et un ou plusieurs groupes amino, qui est sélectionné à partir du groupe se composant de siloxanes possédant la formule :
MₐₐM^{A}_{bb}M^{PE}_{cc}M^{H}_{dd}D_{ff}D^{A}_{gg}D^{PE}ₕₕD^{H}ᵢᵢTⱼⱼT^{A}ₖₖT^{PE}ₗₗT^{H}ₘₘQₙₙ
avec
M = R¹⁵R¹⁶R¹⁷SiO_{1/2};
M^{H} = R¹⁵R¹⁶HSiO_{1/2};
M^{PE} = R¹⁵R¹⁶(-CH₂CH(R¹⁸)(R¹⁹)ₒₒ(C₂H₄O)ₚₚ(C₃H₆O)_{qq}(C₄H₈O)ᵣᵣR²⁰)SiO_{1/2};
M^{A} = R¹⁵R¹⁶(R^{A})SiO_{1/2};
D = R¹⁵R¹⁶SiO_{2/2};
D^{H} = R¹⁵HSiO_{2/2};
D^{PE} = R¹⁵(-CH₂CH(R¹⁸)(R¹⁹)ₒₒ(C₂H₄O)ₚₚ(C₃H₆O)_{qq}(C₄H₈O)ᵣᵣR²⁰)SiO_{2/2};
D^{A} = R¹⁵(R^{A})SiO_{2/2};
T = R¹⁵SiO_{3/2};
T^{H} = HSiO_{3/2};
T^{PE} = (-CH₂CH(R¹⁸)(R¹⁹)ₒₒ(C₂H₄O)ₚₚ(C₃H₆O)_{qq}(C₄H₈O)ᵣᵣR²⁰)SiO_{3/2};
T^{A} = R^{A}SiO_{3/2};
Q = SiO_{4/2};
dans laquelle
R¹⁵, R¹⁶ et R¹⁷ sont sélectionnés chacun indépendamment à partir du groupe de radicaux d'hydrocarbures monovalents possédant de 1 à 60 atomes de carbone,
R¹⁸ est du H ou un groupe d'alkyle de 1 à 6 atomes de carbone,
R¹⁹ est un radical d'hydrocarbures divalent de 1 à 6 carbones,
R²⁰ est sélectionné à partir du groupe se composant du H, des radicaux d'hydrocarbures monofonctionnels de 1 à 6 carbones, et de l'acétyle ;
R^{A} est indépendamment un radical d'hydrocarbures monovalent contenant une ou plusieurs moitiés amino possédant de 1 à 60 atomes de carbone ;
l'indice aa est de 0 à 5 ;
l'indice bb est de 0 à 5 ;
l'indice ff est de 0 à 200 ;
l'indice gg est de 0 à 20 ;
l'indice jj est de 0 à 10 ;
l'indice kk est de 0 à 5 ;
l'indice nn est de 0 à 5 ;
l'indice cc est de 0 à 5 ;
l'indice hh est de 0 à 50 ;
l'indice ll est de 0 à 5 ;
l'indice dd est de 0 à 2 ;
l'indice ii est de 0 à 5 ;
l'indice mm est de 0 à 5 ;
l'indice oo est de 0 à 1 ;
l'indice pp est de 0 à 100 ;
l'indice qq est de 0 à 100 ; ou
l'indice rr est de 0 à 100 ;
en fonction des restrictions que
la somme des indices bb, gg et kk est supérieur à 1 ; et (pp + qq + rr) > 0 ; et, en option
(III) une polyamine (III) ; et
(IV) un aminé secondaire (IV).

2. Composition désémulsionnante selon la revendication 1, dans laquelle le composé oxyrane ou oxétane (I) possède la formule :
R¹²O(C₂H₄O)_{w}(C₃H₆O)ₓ(C₄H₈O)_{y}R¹³
où
R¹² et R¹³ sont indépendamment un radical d'hydrocarbures monovalent contenant une ou plusieurs moitiés amino possédant de 2 à 12 atomes de carbone ;
l'indice w est de 0 à 100 ;
l'indice x est de 0 à 100 ;
l'indice y est de 0 à 100 ;
en fonction de la restrictions que (w+x+y)>0.

3. Composition désémulsionnante selon la revendication 2, dans laquelle le composé (I) et le composé (II) réagissent en présence du composé de polyamine (III) afin de produire ledit produit de réaction, ledit composé de polyamine (III) possédant la formule :
N(R²¹)(R²²)A[N(R²³)(R²⁴)]_{zz}
où
R²¹, R²², R²³ et R²⁴ sont choisis chacun indépendamment à partir du groupe se composant du H ou d'un radical d'hydrocarbures monovalent possédant de 1 à 20 atomes de carbone ;
A est sélectionné à partir d'un groupe se composant d'un radical d'hydrocarbures divalent linéaire ou ramifié possédant 1 à 60 carbones ou un radical divalent de polydialkyle-siloxane, contenant en option du S, du O ou du N ; et
l'indice zz est de 1 à 20.

4. Composition désémulsionnante selon la revendication 1, dans laquelle le produit de réaction possède la formule suivante : 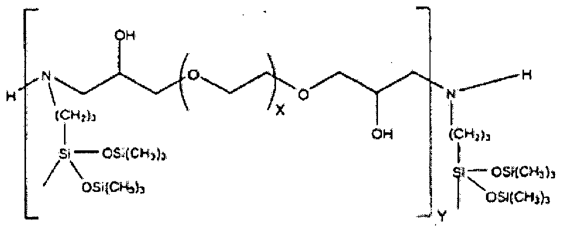 dans laquelle
X est de 5 à 30 et
Y est de 2 à 100.

5. Emulsion comprenant la composition désémulsionnante selon une quelconque des revendications précédentes.

6. Composition désémulsionnante selon une quelconque des revendications 1 ou 4 comprenant par ailleurs au moins un autre ingrédient sélectionné à partir du groupe se composant de silicone supplémentaire ou de désémulsionnants organiques.

7. Méthode de séparation des émulsions comprenant :
(i) l'incorporation d'un volume effectif désémulsionnant de la composition désémulsionnante selon une quelconque des revendications 1 ou 4 dans une émulsion ;
(ii) l'autorisation de l'émulsion à séparer dans au moins deux phases ; et
(iii) la séparation desdites au moins deux phases l'une de l'autre.

8. Méthode selon la revendication 7, dans laquelle l'émulsion contient du pétrole brut.
